# EUROPEAN PATENT APPLICATION

(11) **EP 1 995 113 A2**
(43) Date of publication of application: **26.11.2008**
(21) Application number: 07730384.0
(22) Date of filing: 12.03.2007
(51) Int. Cl.: B60N 2/48, B60R 11/02

(54) **HEADREST FOR MOTOR-VEHICLE SEATS**

(30) Priority: 10.03.2006 ES 200600565 U
(71) Applicant: Vasquez, Angela, 08029 Barcelona (ES); Czwiertnia, Peter, 08029 Barcelona (ES)
(72) Inventor: Vasquez, Angela, 08029 Barcelona (ES); Czwiertnia, Peter, 08029 Barcelona (ES)
(74) Representative: Barroso Sánchez-Lafuente, Ignacio M.
(86) International application number: PCT/ES2007/000143
(87) International publication number: WO 2007/104815

(57) **Abstract**

Headrest (5) for seats (10) of motor vehicles (4). It comprises a body (6) of essentially prismatic shape whose front face (11), which corresponds to the direction of travel of the vehicle (4), is adapted to receive, at rest, the back of the head of the occupant of said seat (10), whilst its rear face (12) faces the rear part of the vehicle's passenger compartment, the headrest (5) being provided with means (8) for its removable fastening to the seat (10) of the vehicle. The body (6) of the headrest (5) has coupled to it a communications module (7) adapted so as to link up, by means of radio waves, with a data-transmission unit (1), the communications module (7) being provided with at least one accessible screen (14) and acting as an interactive link with the data-transmission unit (1).

## Description

### TECHNICAL FIELD OF THE INVENTION

The object of the invention is a headrest for motor-vehicle seats, more specifically, a headrest that can be coupled to motor-vehicle seats and that incorporates a communications module by means of radio signals.

### BACKGROUND OF THE INVENTION

Many embodiments of systems are known that, by means of radio signals, make communication between a vehicle and a data-transmission unit possible. More specifically, systems are known wherein the passenger of a vehicle, such as, for example, a public service vehicle such as a taxi, can gain access to a communications module featured in the rear compartment of the vehicle, adapted to provide general service information, such as, for example, advertisements, service promotions, etc., that come from a data-transmission unit.

Patent document US 2003/006899 discloses an information system for passengers of a motor-vehicle by means of radio signals. The information is received by the vehicle from a data-transmission unit and stored by means of a computer system, wherefrom it is recovered by the passenger of the vehicle according to an order of pre-established categories. The document discloses a systems application which comprises the use of a touch screen used as a means of connection between the passenger and the information system, featuring a touch screen on the back of the front seat of the vehicle.

The known systems have as a main drawback the fact that both the means used for the reception and processing of the radio signals received, as well as the interactive means which allow the passenger to use the information received, are incorporated in the motor-vehicles in a built-in fashion, generally from origin, in practically immobile compartments, such as, for example, the back of a seat.

This presents a limitation regarding the possibilities of interactive communications systems applications such as those previously described in vehicles that do not incorporate such systems from origin. An object of the present invention is precisely that of making the implementation of interactive communications systems possible in any type of public or private vehicle, without it being necessary to make modifications in the electrical systems of the vehicle or in its compartment.

### EXPLANATION OF THE INVENTION

The headrest for motor-vehicle seats object of the invention is of the type that comprises a body of essentially prismatic shape with rounded edges, which, in its front face, which corresponds to the direction of travel of the vehicle, is adapted to receive, at rest, the back of the head, whilst its rear face faces the rear part of the vehicle's passenger compartment, the headrest being provided with means for its removable fastening to the seat of the vehicle.

It is characteristic of the headrest of the invention the fact that the body of the headrest has coupled to it a communications module adapted so as to link up, by means of radio waves, with a data-transmission unit, the communications module being provided with at least one accessible screen, preferably a touch screen, whose outer surface is preferably disposed noticeably at the level of the rear face of the headrest and which acts as an interactive link with the data-transmission unit.

This characteristic of the headrest of the invention provides a solution to the problems that, until the present moment, suggested the implementation of interactive communications systems between passengers of a motor-vehicle and a data-transmission unit, when the vehicle did not incorporate such system from origin, as is current common practice. Effectively, it is possible with the headrest of the invention to simply replace the original headrest of the motor-vehicle with the headrest of the invention, which logically can adopt the same configuration as that of the original, without having to make any modification in the seat that receives it.

The headrest of the invention can be implemented both in public service vehicles, such as taxis, personal transportation companies, long-distance buses, etc., as well as private use vehicles which feature back seats. Logically, the headrest of the invention can also be originally incorporated in the vehicle, i.e. during its assembly.

Another characteristic of the headrest of the invention consists in that the communications module is supplied through the power network of the vehicle.

According to another characteristic of the invention, the coupling of the communications module with the body of the headrest is removable.

In accordance with another characteristic of the invention, the communications module features a rechargeable accumulator battery, for its own supply.

Another characteristic of the invention consists in that the communications module is provided with an input/output USB port, a "bluetooth", "i.Link" or infrared communications port, a video camera, and/or a "voIP"-type Internet telephone system.

### BRIEF DESCRIPTION OF THE DRAWINGS

In the figures of the sheets of drawings, by way of a non-limitative example, the headrest for motor-vehicle seats object of the invention has been schematically represented. In said figures:
- FIG. 1: is a simplified representation of a data-transmission system;
- FIG. 2: is a perspective view that shows a headrest for motor-vehicle seats adapted to receive a communications module;
- FIG. 3: is a perspective view of the headrest of FIG. 2 with the communications module coupled thereto; and
- FIG. 4: is a front view of the headrest of the invention with the communications module.

### DETAILED DESCRIPTION OF THE EXAMPLE OF EMBODIMENT

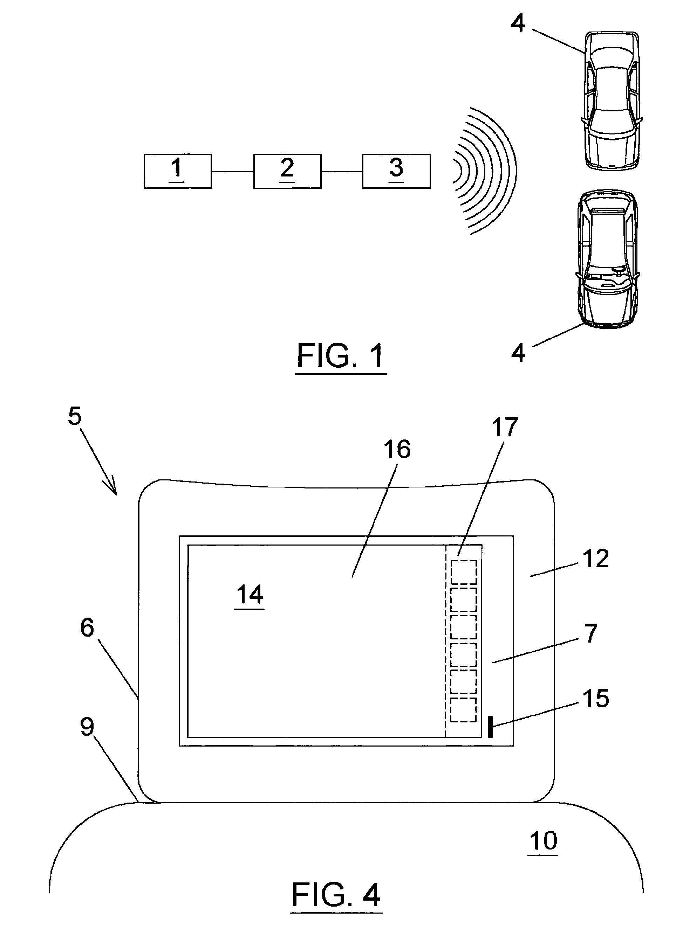

In FIG. 1, a communications system has been represented by means of a block diagram and in a very simplified fashion. The system essentially comprises a data-transmission unit 1 which links up to the Internet indicated with 2 and which produces the transmission of information by means of radio waves through the transmitter 3; the radio transmission reaches vehicles 4 provided with the headrest object of the invention.

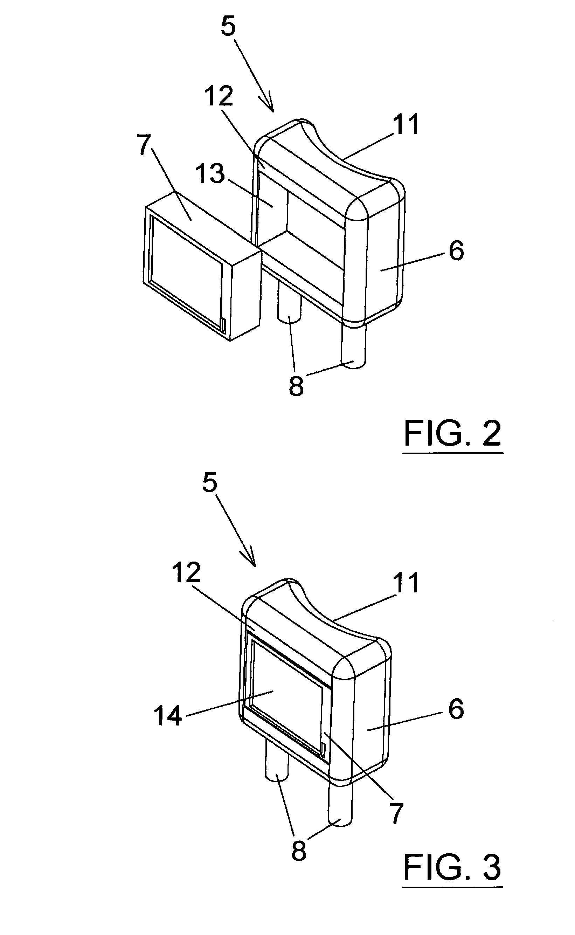

In FIG. 2, it can be observed that the headrest 5 of the invention comprises a body 6 and a communications module 7.

The body 6 has a generally prismatic shape, essentially parallelepipedic of rounded edges, from whose lower side protrude cylindrical extensions 8, represented in FIG. 2 and FIG. 3, which have the purpose of the removable fastening of the body 6 at the upper end 9 of a motor-vehicle seat 10, being disposed the set of headrest and upper end of the seat as represented in FIG. 4.

It has been planned that the communications module 7 with its extensions 8 is a standard or single product, and that the system can incorporate "link up" elements, which allow the module 7 to adapt to any brand or model of motor-vehicle, consistent in elements which couple to the cylindrical extension 8 at one end, and which reproduce the "manufactured" shape of the brand and concrete model.

The front face 11 of the body 6, or rather the face facing the direction of travel of the vehicle, has a configuration adapted to receive the rear part of the headpiece of the passenger seated in the seat 10, and fulfils the appropriate protective functions in the event of an accident. The rear face 12 of the body 6 remains facing the passenger who occupies the corresponding back seat of the vehicle, and in it there is a housing 13 adapted to receive the communications module 7, in the manner shown in FIG. 3.

The coupling of the communications module 7 with the body 6 can be carried out in a immovable manner, or rather in a manner which in normal conditions of use can not be taken out of its housing 13 by the passenger of the vehicle; this is a condition which is convenient in those cases in which the headrest is mounted on public transportation vehicle seats. In this case, the communications module 7 is supplied by the power network of the vehicle.

On the other hand, the coupling of the communications module 7 with the body 6 can be carried out in a removable manner, or rather that the communications module 7 can be taken out of its housing 13 by the user when they feel it appropriate, for example, to use the communications module 7 somewhere else. In this case, the communications module 7 can incorporate a rechargeable accumulator battery for its own power supply.

The communications module 7 comprises a touch screen 14 which, as is observed in FIG. 3, is disposed at the level of the front face 12 of the body 6 of the headrest of the invention. The variant has been planned wherein a communications module incorporates two monitors or screens 14, for greater versatility and possibility of functions.

The touch screen 14 acts as an interactive link up element between the passenger and the data-transmission unit, in this manner giving the passenger access to the information provided by said data-transmission unit which, for example, can be local. Furthermore, the communications module can access the Internet, with all of the services that stem therefrom, such as, amongst many others, e-mail reception services.

In FIG. 4, the headrest of the invention has been represented with the communications module 7 viewed head-on, as a passenger in the back seat would see it. By way of example, in this figure it can be observed that the visible area of the touch screen 14, which has a perimeter which corresponds to that of the communications module 7, comprises two windows separated by means of a dashed line; the larger window 16 is intended for the reception of information, while the smaller window 17 is intended for touch control options.

There is an input/output USB port 15, which allows for the possibility that the passenger can manage information through the communications module 7.

Alternatively or complementarily, the communications module 7 can comprise a "bluetooth", "i.Link" or infrared communications port, a video camera and/or a "voIP" type Internet telephone system.

## Claims

1. Headrest (5) for seats (10) of motor vehicles (4), of those that comprise a body (6) of essentially prismatic shape whose front face (11), which corresponds to the direction of travel of the vehicle (4), is adapted to receive, at rest, the back of the head of the occupant of said seat (10), whilst its rear face (12) faces the rear part of the vehicle's passenger compartment, the headrest (5) being provided with means (8) for its removable fastening to the seat (10) of the vehicle, which is **characterised in that** the body (6) of the headrest (5) has coupled to it a communications module (7) adapted so as to link up, by means of radio waves, with a data-transmission unit (1), the communications module (7) being provided with at least one accessible screen (14) and acting as an interactive link with the data-transmission unit (1).

2. Headrest according to claim 1, **characterised in that** the screen (14) is a touch screen.

3. Headrest according to claim 1, **characterised in that** the communications module (7) is supplied through the vehicle's power network.

4. Headrest according to claim 1, **characterised in that** the coupling of the communications module (7) with the body (6) of the headrest (5) is a removable coupling.

5. Headrest according to claim 4, **characterised in that** the communications module (7) is provided with a rechargeable accumulator battery, for its own supply.

6. Headrest according to claim 1, **characterised in that** the communications module (7) is provided with an input/output USB port (15).

7. Headrest according to claim 1, **characterised in that** the communications module (7) is provided with a "bluetooth" type communications port.

8. Headrest according to claim 1, **characterised in that** the communications module (7) is provided with an "i.Link" type communications port.

9. Headrest according to claim 1, **characterised in that** the communications module (7) is provided with an infrared communications port.

10. Headrest according to claim 1, **characterised in that** the communications module (7) is provided with a "voIP" type Internet telephone system.

11. Headrest according to claim 1, **characterised in that** the outer surface of the screen (14) is disposed noticeably at the level of the rear face (12) of the headrest (5).
